(19) Europäisches Patentamt
European Patent Office
Office européen des brevets

(11) **EP 1 788 717 A1**

(12) **EUROPEAN PATENT APPLICATION**

(43) Date of publication:
**23.05.2007 Bulletin 2007/21**

(51) Int Cl.:
***H04B 1/69*** *(2006.01)*

(21) Application number: **06124205.3**

(22) Date of filing: **16.11.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **22.11.2005 KR 20050111864**

(71) Applicant: **Samsung Electronics Co., Ltd.**
**Suwon-si, Gyeonggi-Do (KR)**

(72) Inventors:
• **Park, Woo-jong,**
**Samsung Advanced Inst. of Tech. Mt**
**Yongin-si,**
**Gyunggi-do 449-712 (KR)**
• **Ma, Joong-soo,**
**Samsung Advanced Inst. of Tech. Mt**
**Yongin-si,**
**Gyunggi-do 449-712 (KR)**

• **Seo, Myung-hwan,**
**Samsung Adv. Inst. of Tech. Mt**
**Yongin-si,**
**Gyunggi-do 449-712 (KR)**
• **Na, Jae-eun,**
**Samsung Advanced Inst. of Tech. Mt**
**Yongin-si,**
**Gyunggi-do 449-712 (KR)**
• **Jeong, Min-seop,**
**Samsung Adv. Inst. of Tech. Mt**
**Yongin-si,**
**Gyunggi-do 449-712 (KR)**

(74) Representative: **Grünecker, Kinkeldey,**
**Stockmair & Schwanhäusser**
**Anwaltssozietät**
**Maximilianstrasse 58**
**80538 München (DE)**

(54) **Method and apparatus for acquiring a received impulse radio signal**

(57) An impulse signal acquisition method and apparatus are provided. The impulse signal acquisition apparatus includes: an impulse generator which varies a pulse width of an impulse signal used for transmitting data according to a predetermined control signal to generate the impulse signal; and a controller which applies a pulse width control signal used to vary the pulse width of the impulse signal to the impulse generator.

FIG. 2A

**Description**

## BACKGROUND OF THE INVENTION

1. Field of the Invention

Methods and apparatuses consistent with the present invention relate to acquiring an impulse signal, and more particularly, to the acquisition of an impulse signal having a wide cell from an impulse signal used for transmitting and receiving data in an ultra wide band (UWB) communication system and then acquiring an impulse signal having a narrow cell inside the impulse having the wide cell.

2. Description of the Related Art

Unlike existing narrow band communications for transmitting data together with carrier waves with a base band signal, recent UWB wireless technology is used to transmit data using ultra-short base band pulses reaching several nano-seconds without carrier waves.

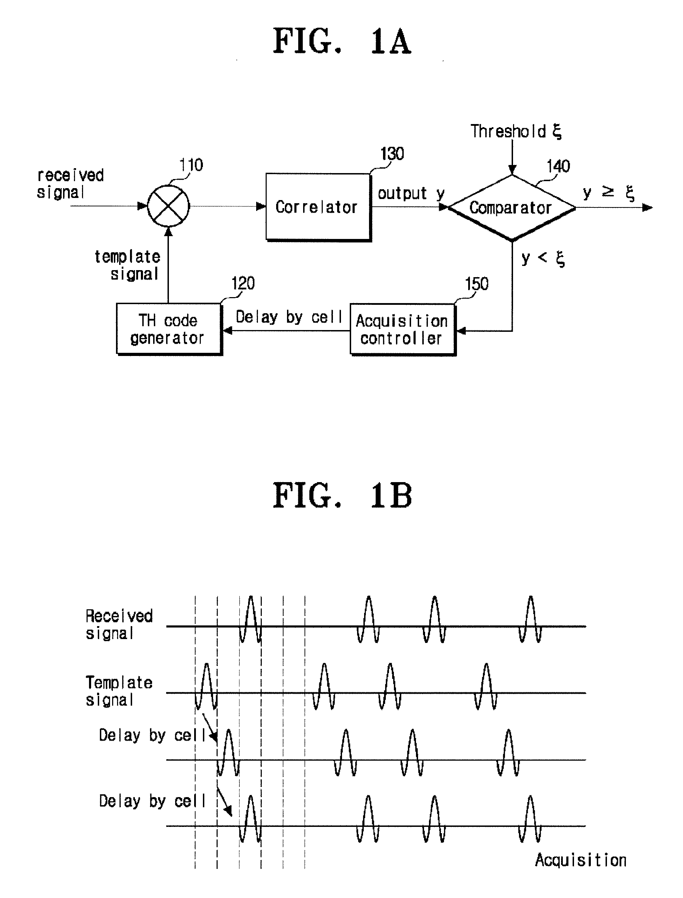

FIG. 1A is a block diagram of a related art UWB communication system which performs a serial search to acquire an impulse signal.

Referring to FIG. 1A, a received signal is multiplied by a template signal output from a time hopping (TH) code generator 120 by a multiplier 110 and then applied to a correlator 130. A signal y output from the correlator 130 is compared with a threshold value $\xi$ by a comparator 140. If the signal y is smaller than the threshold $\xi$, the signal y is applied to an acquisition controller 150. If the signal y is larger than the threshold value $\xi$, a serial search process shown in FIG. 1B is performed to acquire an impulse signal.

FIG. 1B is a view illustrating a serial search process for acquiring an impulse signal.

As shown in FIG. 1B, in a case where a received signal and a template signal do not synchronize with each other due to two cells, the acquisition controller 150 controls the TH code generator 120 to delay the template signal by one cell and then by another cell so as to synchronize the template signal with the received signal.

Here, an operation of acquiring the template signal synchronized with the received signal is performed using a sub-nanosecond cell.

Also, in an uncertainty region of 20 nanoseconds (ns), an impulse acquisition is tested 20 times in the unit of 1 ns cell. Additionally, in a case where the uncertainty region is 1 microsecond ($\mu$s) and a cell is 0.25 ns, 4000 cells are required. Thus, 4000 tests must be performed. An average impulse acquisition time for acquiring an impulse radio (IR)-UWB signal is 500 ms to about 1 second.

As described above, in the related art, a large number of tests are required for acquiring an impulse signal. Also, a large amount of time is required for acquiring the impulse signal, which increases power consumption.

## SUMMARY OF THE INVENTION

Exemplary embodiments of the present invention overcome the above disadvantages and other disadvantages not described above. Also, the present invention is not required to overcome the disadvantages described above, and an exemplary embodiment of the present invention may not overcome any of the problems described above.

The present invention provides an impulse signal acquisition method and apparatus for acquiring an impulse signal having a wide cell from an impulse signal used for transmitting and receiving data in an UWB communication system and then acquiring an impulse signal having a narrow cell inside the impulse signal having the wide cell.

The present invention also provides an impulse signal acquisition transmitter comprising an impulse generator which varies a pulse width of an impulse signal used for transmitting data according to a predetermined control signal to generate the impulse signal, and a controller which applies a pulse width control signal used to vary the pulse width of the impulse signal to the impulse generator.

The impulse generator may generate an impulse signal having a narrow cell or an impulse signal having an N-times wider cell than the narrow cell according to the pulse width control signal.

If a pulse width of the impulse signal having the narrow cell is 1 ns, a pulse width of the impulse signal having the wide cell is 2 ns.

According to another aspect of the present invention, there is provided an impulse signal acquisition transmitter comprising a first impulse generator which generates a first impulse signal having a first pulse width; a second impulse generator which generates a second impulse signal having a second pulse width; an $N^{th}$ impulse generator which generates an $N^{th}$ impulse signal having an $N^{th}$ pulse width; a switch which switches one of the first, second, and $N^{th}$ impulse generators according to a predetermined control signal to generate an impulse signal; and a controller which controls the switch so as to generate the impulse signal.

The first, second, and N$^{th}$ impulse generators may generate impulse signals which have narrow or wide cells.

According to another aspect of the present invention, there is provided an impulse signal acquisition receiver comprising an impulse generator which varies a pulse width according to a predetermined control signal to generate an impulse signal to be multiplied by a received signal; a comparator which compares the received signal with a threshold value; and a controller which applies a pulse width control signal which varies the pulse width to the impulse generator and shifts a phase of the impulse signal so as to synchronize the impulse signal with the received signal.

The impulse generator may generate an impulse signal having a narrow cell or an impulse signal having an N-times wider cell than the narrow cell according to the pulse width control signal.

According to another aspect of the present invention, there is provided an impulse signal acquisition receiver comprising a first impulse generator which generates a first impulse signal having a first pulse width; a second impulse generator which generates a second impulse signal having a second pulse width; an N$^{th}$ impulse generator which generates an N$^{th}$ impulse signal having an N$^{th}$ pulse width; a switch which switches one of the first, second, and N$^{th}$ impulse generators to generate an impulse signal to be multiplied by a received signal; a comparator which compares the received signal with a threshold value; and an acquisition controller which controls the switch to generate the impulse signal and shifts a phase of the impulse signal so as to synchronize the impulse signal with the received signal.

The impulse signal acquisition receiver may further include: a pseudo number (PN) code generator which generates a PN code for coding the impulse signal; and a switch which switches the PN code generator to one of the first, second, and N$^{th}$ impulse generators according to control of the acquisition controller.

The first, second, and N$^{th}$ impulse generators may generate impulse signals which have narrow cells or wide cells.

According to another aspect of the present invention, there is provided an impulse signal acquisition method comprising transmitting a preamble packet which includes an impulse signal; receiving the preamble packet and acquiring a received signal from the preamble packet using an impulse having a wide cell; and acquiring a received signal using an impulse having a narrow cell inside the impulse having the wide cell.

In the transmitting, the impulse signal may be an impulse signal having a wide cell or an impulse signal having a narrow cell.

In the receiving, the preamble packet may include a first preamble packet which includes an impulse signal having a wide cell and a second preamble packet which includes an impulse signal having a narrow cell.

The received signal may be compared with a threshold value, and if the received signal does not synchronize with the impulse signal, a phase of the impulse signal may shift so as to synchronize the impulse signal with the received signal.

A pulse width of the impulse signal having the narrow cell may be 1 ns, and a pulse width of the impulse signal having the wide cell may be 2 ns.

## BRIEF DESCRIPTION OF THE DRAWINGS

The above and other aspects of the present invention will be more apparent by describing certain exemplary embodiments of the present invention with reference to the accompanying drawings, in which:

FIG. 1A is a block diagram of a related art UWB communication system which performs a serial search to acquire an impulse signal;

FIG. 1B is a view illustrating a serial search process for acquiring an impulse signal;

FIG. 2A is a view illustrating an impulse signal acquisition method according to an exemplary embodiment of the present invention compared with a related art impulse signal acquisition method;

FIG. 2B is a view illustrating a structure of preamble packet data transmitted and received in an UWB communication system to which an impulse signal is applied according to an exemplary embodiment of the present invention;

FIG. 2C is a graph illustrating an impulse signal having a wide cell and an impulse signal having a narrow cell;

FIG. 3 is a view illustrating parameters different from a cell width of an impulse signal;

FIG. 4 is a block diagram of a transmitter of an impulse signal acquisition apparatus according to an exemplary embodiment of the present invention;

FIG. 5 is a block diagram of a transmitter of an impulse signal acquisition apparatus according to another exemplary embodiment of the present invention;

FIG. 6 is a block diagram of a receiver of an impulse signal acquisition apparatus according to an exemplary embodiment of the present invention;

FIG. 7 is a block diagram of a receiver of an impulse signal acquisition apparatus according to another exemplary embodiment of the present invention; and

FIG. 8 is a view illustrating a process of acquiring an impulse signal according to an exemplary embodiment of the present invention.

FIG. 9 is a graph illustrating acquisition times required for acquiring an impulse signal having a wide cell and an impulse signal having a narrow cell.

## DETAILED DESCRIPTION OF EXEMPLARY EMBODIMENTS OF THE INVENTION

Certain exemplary embodiments of the present invention will be described in greater detail with reference to the accompanying drawings.

In the following description, same drawing reference numerals are used for the same elements even in different drawings. The matters defined in the description such as a detailed construction and elements are nothing but the ones provided to assist in a comprehensive understanding of the invention. Thus, it is apparent that the exemplary embodiments of the present invention can be carried out without those defined matters. Also, well-known functions or constructions are not described in detail since they would obscure the invention in unnecessary detail.

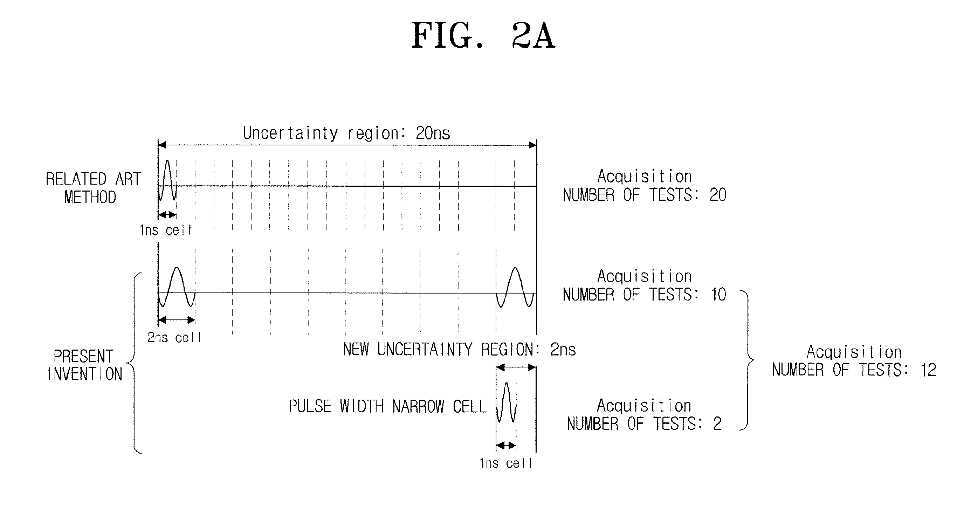

FIG. 2A is a view illustrating an impulse signal acquisition method according to an exemplary embodiment of the present invention compared with a related art impulse signal acquisition method. As shown in FIG. 2A, in the impulse signal acquisition method according to the exemplary embodiments of the present invention, an impulse signal is acquired using a 2-ns cell, and then an impulse signal is acquired using a 1 ns cell inside the 2 ns cell.

Thus, in the related art impulse signal acquisition method, 20 tests are performed to acquire an impulse signal in a 20-ns uncertainty region. However, in the impulse signal acquisition method according to the exemplary embodiments of the present invention, the 2-ns cell is used. Thus, 10 tests are performed to acquire an impulse signal. 2 tests are performed with respect to the impulse signal in the 2-ns cell using the 1-ns cell. As a result, 12 tests are performed in the 20-ns uncertainty region.

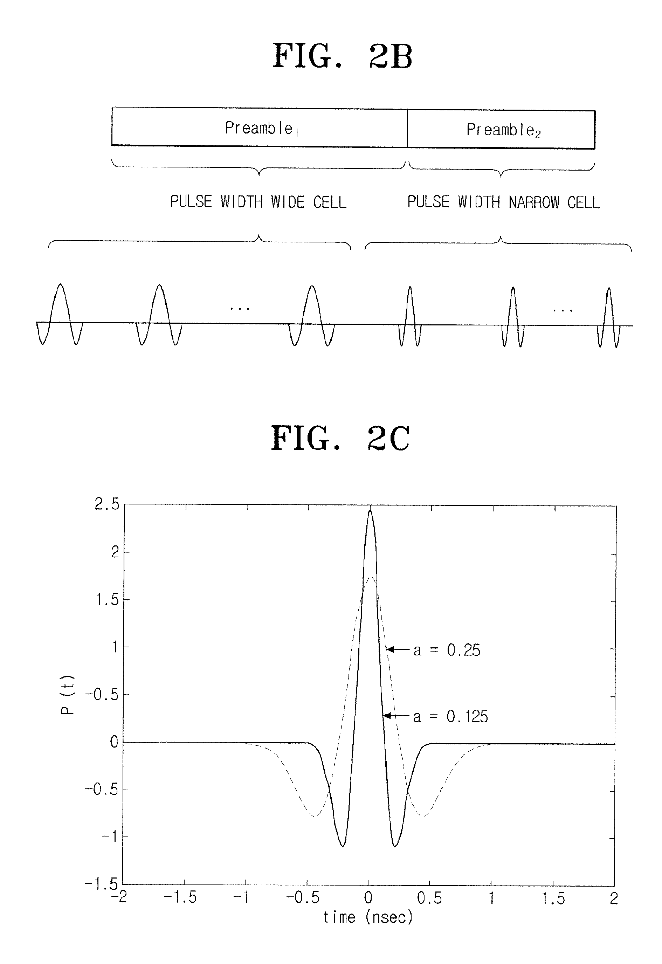

FIG. 2B is a view illustrating a structure of preamble packet data transmitted and received in a UWB communication system to which an impulse signal is applied according to an exemplary embodiment of the present invention.

As shown in FIG. 2B, the preamble packet data according to the present exemplary embodiment includes a first preamble packet which includes impulses with wide cells and a second preamble packet which includes impulses with narrow cells.

For example, the first preamble packet may comprise a plurality of 2-ns cells, and the second preamble packet may include 1-ns cells.

Here, an impulse signal p(t) can be obtained using a Gaussian quadratic function shown in Equation 1:

$$p(t) = \sqrt{\frac{4}{3a\sqrt{\pi}}}[1 - [\frac{t}{a}]^2]\exp[-\frac{1}{2}(\frac{2}{a})^2] \qquad \cdots(1)$$

wherein 'a' is 0.125 ns in a narrow cell but 0.25 ns in a wide cell.

Accordingly, waveforms of impulse signals with respect to the narrow cell of 0.125 ns and the wide cell of 0.25 ns obtained using Equation 1 are shown in FIG. 2C. As shown in FIG. 2C, a width of a wide cell is two times a width of a narrow cell.

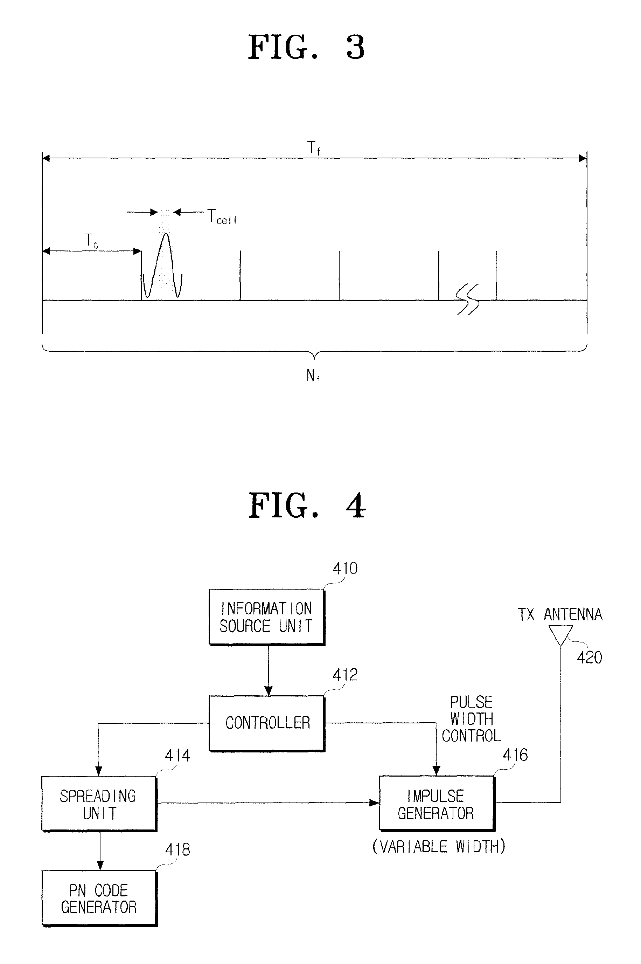

Also, Table 1 below shows cell widths and parameters, and FIG. 3 shows parameters different from the cell widths.

Table 1

| Parameter | Sign | Basic Value |
|---|---|---|
| Frame duration | $T_f$ | 100 ns |
| Chip Duration | $T_c$ | 10 ns |
| # Chip in One Frame | $N_f$ | 10 |
| Cell Width | $T_{cell}$ | 2a |
| Period of TH Code | $N_c$ | 16 |
| Uncertainty Region | $T_p$ | $N_c*T_f$ = 1600 ns |
| # Cells in the Uncertainty Region | N | $T_p$/Tb 6400(Tcell 0.25), 3200(0.5) |

FIG. 4 is a block diagram of a transmitter of an impulse signal acquisition apparatus according to an exemplary embodiment of the present invention.

Referring to FIG. 4, the transmitter includes an information source unit 410, a controller 412, a spreading unit 414, an impulse generator 416, a PN code generator 418, and a transmitter (Tx) antenna 420.

The information source unit 410 stores data to be transmitted, and the controller 412 controls the impulse generator 416 to generate impulses of an impulse signal having a 2-ns or 1-ns cell width, the impulse signal being used to transmit the data.

The spreading unit 414 spreads the data with a PN code according to a control signal of the controller 412.

The impulse generator 416 generates a variable impulse signal having a 2-ns or 1-ns cell width according to a pulse width control signal of the controller 412.

The Tx antenna 420 transmits an impulse signal for the data in a wireless manner.

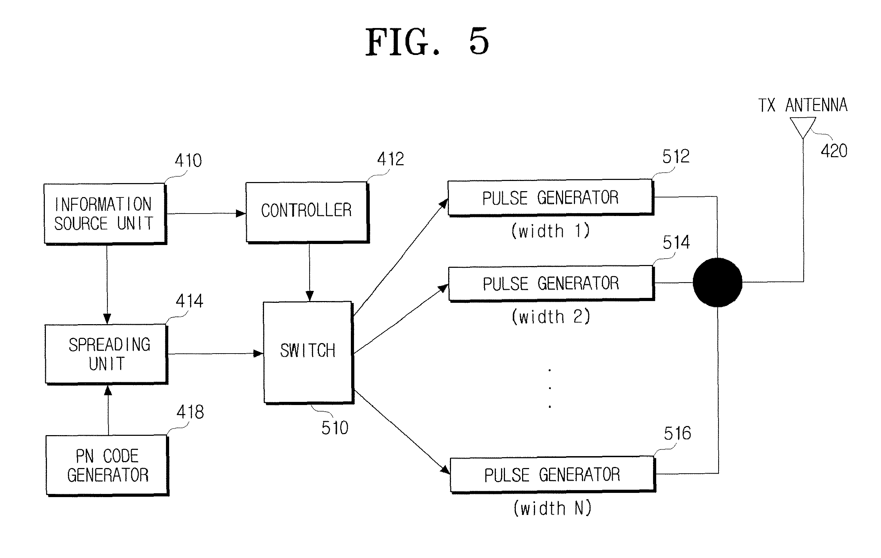

FIG. 5 is a block diagram of a transmitter of an impulse signal acquisition apparatus according to another exemplary embodiment of the present invention.

Referring to FIG. 5, the transmitter according to the present exemplary embodiment includes an information source unit 410, a controller 412, a spreading unit 414, a switch 510, a first impulse generator 512, a second impulse generator 514, ..., and $N^{th}$ impulse generator 516, a PN code generator 418, and a Tx antenna 420.

The information source unit 410, the spreading unit 414, the PN code generator 418, and the Tx antenna 420 are as described in the previous exemplary embodiment and thus will not be described herein.

The transmitter according to the present exemplary embodiment includes impulse generators which generate impulse signals which have different pulse widths and selectively switches the impulse generators to generate an impulse signal having a corresponding pulse width.

The switch 510 switches one of the first impulse generator 512, the second impulse generator 514, ..., and the $N^{th}$ impulse generator 516 according to a control signal of the controller 412.

The first impulse generator 512 generates a first impulse signal having a first pulse width, for example, a 2-ns-cell.

The second impulse generator 514 generates a second impulse signal having a second pulse width, for example, a 1-ns cell.

The $N^{th}$ impulse generator 516 generates an $N^{th}$ impulse signal having an $N^{th}$ pulse width.

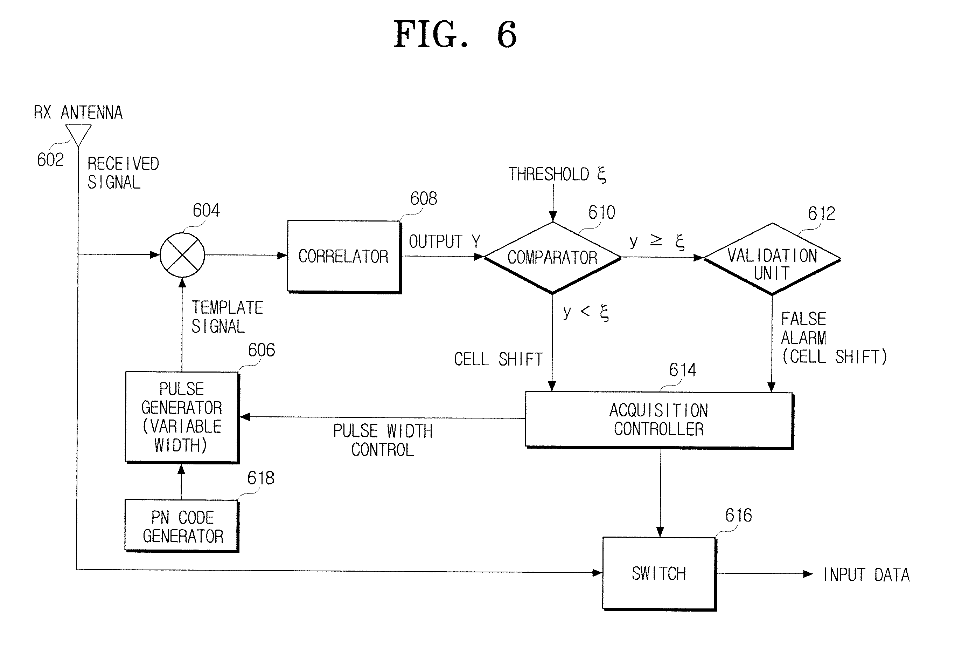

FIG. 6 is a block diagram of a receiver of an impulse signal acquisition apparatus according to an exemplary embodiment of the present invention. Referring to FIG. 6, the receiver includes a Receiver (Rx) antenna 602, a multiplier 604, an impulse generator 606, a correlator 608, a comparator 610, a validation unit 612, an acquisition controller 614, a switch 616, and a PN code generator 618.

The Rx antenna 602 receives data from a transmitter.

The multiplier 604 multiplies a received signal by an impulse signal and then outputs the multiplication result.

The impulse generator 606 generates a varied impulse signal according to a pulse width control signal of the acquisition controller 614.

The correlator 608 detects a preamble and a sync word signal using an auto-correlation method.

The comparator 610 compares a signal y applied from the correlator 608 with a threshold value $\xi$. If the signal y is smaller than the threshold value $\xi$, the comparator 610 transmits a cell shift signal to the acquisition controller 614. If the signal y is larger than or equal to the threshold value $\xi$, the comparator 610 transmits a false alarm signal to the acquisition controller 614 through the validation unit 612.

The acquisition controller 614 applies a control signal for shifting a phase of an impulse signal to be generated and a pulse width control signal for generating an impulse signal having a varied pulse width to the impulse generator 606 according to the cell shift signal applied from the comparator 610. When the received signal and the impulse signal synchronize with each other, the acquisition controller 614 controls the switch 616 to input the received signal as input data.

The PN code generator 618 generates a PN code for coding the received signal.

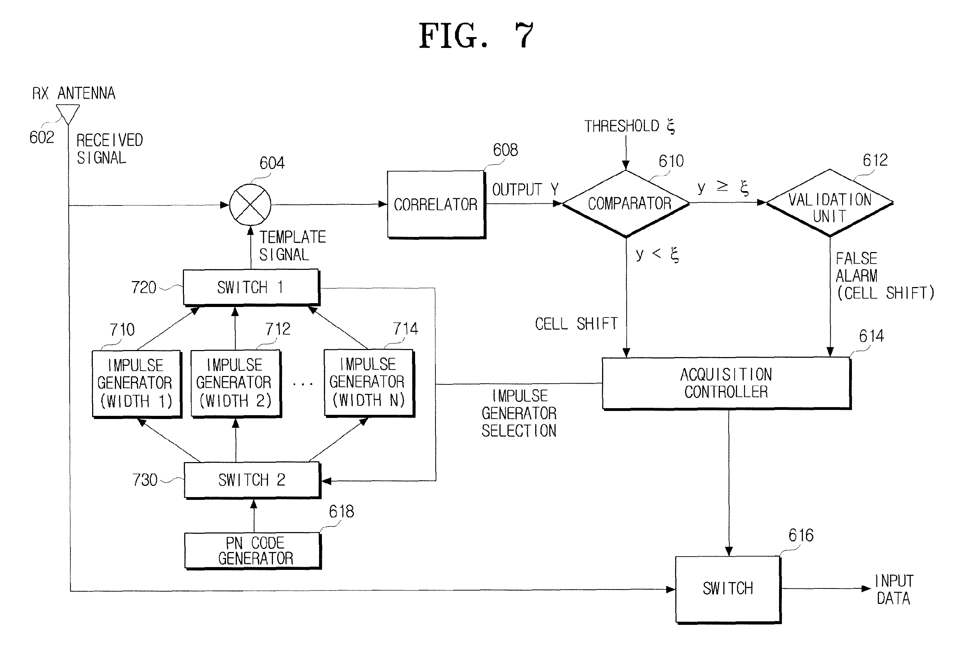

FIG. 7 is a block diagram of a receiver of an impulse signal acquisition apparatus according to another exemplary embodiment of the present invention. Referring to FIG. 7, the receiver includes an Rx antenna 602, a multiplier 604, a first impulse generator 710, a second impulse generator 712, ..., and an $N^{th}$ impulse generator 714, a first switch 720, a second switch 730, a correlator 608, a comparator 610, a validation unit 612, an acquisition controller 614, a switch 616, and a PN code generator 618.

The Rx antenna 602, the multiplier 604, the correlator 608, the comparator 610, the validation unit 612, the switch 616, and the PN code generator 618 are as described in the previous exemplary embodiment and thus will not be described herein.

The receiver according to the present exemplary embodiment includes impulse generators which generate impulse signals which have different pulse widths and selectively switches the impulse generators to generate an impulse signal having a corresponding pulse width.

The first impulse generator 710 generates a first impulse signal having a first pulse width, for example, a 2-ns cell.

The second impulse generator 712 generates a second impulse signal having a second pulse width, for example, a 1-ns cell.

The N$^{th}$ impulse generator 714 generates an N$^{th}$ impulse signal having an N$^{th}$ pulse width. The first switch 720 switches one of the first impulse generator 710, the second impulse generator 712, ..., and the N$^{th}$ impulse generator 714 according to a control signal of the acquisition controller 614.

The second switch 730 switches the PN code generator 618 to one of the first impulse generator 710, the second impulse generator 712, ..., and the N$^{th}$ impulse generator 714 according to the control signal of the acquisition controller 614 to insert a PN code into each impulse signal.

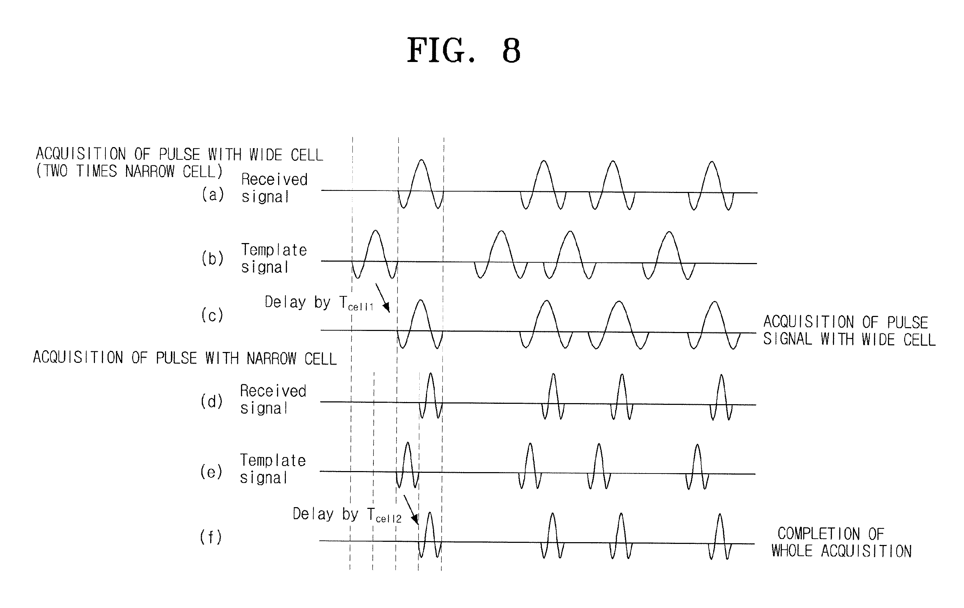

FIG. 8 is a view which illustrates a process of acquiring an impulse signal according to an exemplary embodiment of the present invention.

For understanding of the exemplary embodiment of the present invention, a receiver will be described as an example.

When a signal as shown in (a) of FIG. 8 is received through the Rx antenna 602, the acquisition controller 614 applies a pulse width control signal for generating an impulse signal having a wide cell as shown in (b) of FIG. 8 to the impulse generator 606. The signal received through the Rx antenna 602 is also an impulse signal having a wide cell.

Thus, the impulse generator 606 generates the impulse signal having the wide cell shown in (b) of FIG. 8 according to the pulse width control signal.

The impulse signal having the wide cell is multiplied by the received signal by the multiplier 604 and then applied to the correlator 608.

A signal y output from the correlator 608 is compared with a threshold value $\xi$ by the comparator 610.

If the received signal shown in (a) of FIG. 8 and the impulse signal shown in (b) of FIG. 8 do not synchronize with each other due to one cell, the comparator 610 outputs a cell shift signal for shifting the cell to the acquisition controller 614.

The acquisition controller 614 applies a pulse width control signal for shifting the impulse signal by one cell according to the cell shift signal to the impulse generator 606.

The impulse generator 606 generates an impulse signal which shifts by one cell so as to synchronize with the received signal as shown in (c) FIG. 8.

If the received signal received through the Rx antenna 602 is a received signal having a narrow cell as shown in (d) of FIG. 8, the acquisition controller 614 of the receiver generates an impulse signal having a narrow cell.

Thus, the impulse generator 606 generates an impulse signal having a narrow cell as shown in (e) of FIG. 8.

If the received signal and the impulse signal do not synchronize with each other by one cell, the acquisition controller 614 shifts the impulse signal by one cell to generate an impulse signal.

Thus, the impulse generator 606 generates an impulse signal having a narrow cell, the impulse signal synchronizing with the received signal, as shown in (f) of FIG. 8.

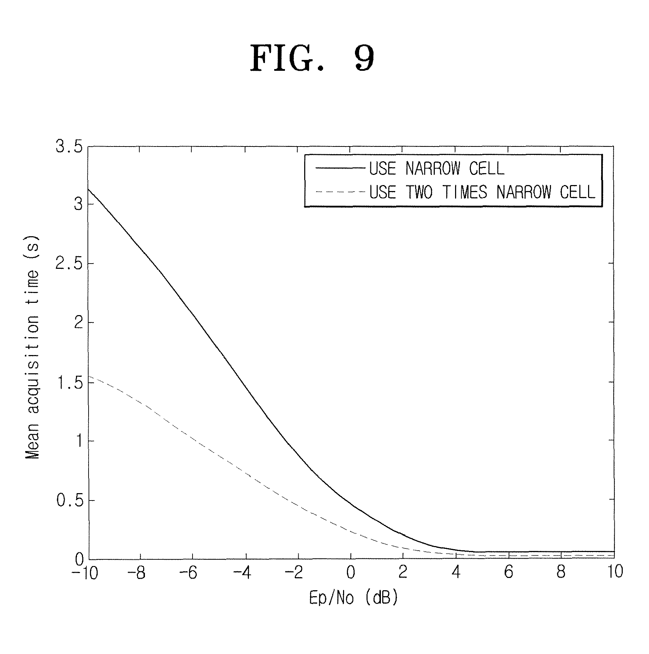

Acquisition times required for acquiring an impulse signal having a wide cell and an impulse signal having a narrow cell are shown in FIG. 9. As shown in FIG. 9, a mean acquisition time required for acquiring an impulse signal having a wide cell is much shorter than a mean acquisition time required for acquiring an impulse signal having a narrow cell.

As described above, according to the exemplary embodiments of the present invention, an acquisition time required for acquiring an impulse signal used for transmitting and receiving data can be reduced. Thus, a number of tests performed for acquiring the impulse signal can be reduced. Also, power consumption can be reduced so as to reduce energy. Efficiency of transmitting and receiving the data can be improved.

The foregoing embodiments are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

**Claims**

1.  An impulse signal acquisition transmitter comprising:

    an impulse generator which varies a pulse width of an impulse signal used for transmitting data according to a control signal to generate the impulse signal; and
    a controller which applies a pulse width control signal to the impulse generator.

2.  The impulse signal acquisition transmitter of claim 1, wherein the impulse generator generates one of an impulse signal having a first cell and an impulse signal having a second cell according to the pulse width control signal, the second cell is N-times wider than the first cell, and N is an integer.

3. The impulse signal acquisition transmitter of claim 2, wherein a pulse width of the impulse signal having the first cell is 1 ns, and a pulse width of the impulse signal having the second cell is a 2 ns.

4. An impulse signal acquisition transmitter comprising:

a first impulse generator which generates a first impulse signal having a first pulse width;
a second impulse generator which generates a second impulse signal having a second pulse width;
a third impulse generator which generates a third impulse signal having a third pulse width;
a switch which switches one of the first, second, and third impulse generators according to a control signal to generate one of the first, second and first impulse signals as an impulse signal; and
a controller which controls the switch.

5. The impulse signal acquisition transmitter of claim 4, wherein the first, second, and third impulse generators generate first, second and third impulse signals having cells of different widths.

6. An impulse signal acquisition receiver comprising:

an impulse generator which varies a pulse width according to a control signal to generate an impulse signal to be multiplied by a received signal;
a comparator which compares the received signal with a threshold value; and
a controller which applies a pulse width control signal which varies the pulse width to the impulse generator and shifts a phase of the impulse signal so as to synchronize the impulse signal with the received signal.

7. The impulse signal acquisition receiver of claim 6, wherein the impulse generator generates one of an impulse signal having a first cell and an impulse signal having a second cell according to the pulse width control signal, the second cell is N-times wider than the first cell, and N is an integer.

8. An impulse signal acquisition receiver comprising:

a first impulse generator which generates a first impulse signal having a first pulse width;
a second impulse generator which generates a second impulse signal having a second pulse width;
a third impulse generator which generates an $N^{th}$ impulse signal having a third pulse width;
a first switch which switches one of the first, second, and third impulse generators to generate one of the first, second and third impulse signals as an impulse signal to be multiplied by a received signal;
a comparator which compares the received signal with a threshold value; and
an acquisition controller which controls the first switch and shifts a phase of the impulse signal so as to synchronize the impulse signal with the received signal.

9. The impulse signal acquisition receiver of claim 8, further comprising:

a pseudo noise (PN) code generator which generates a PN code for coding the impulse signal; and
a second switch which selectively connects the PN code generator to one of the first, second, and third impulse generators according to control of the acquisition controller.

10. The impulse signal acquisition receiver of claim 8, wherein the first, second, and third impulse generators generate the first, second and third impulse signals having cells of different widths.

11. An impulse signal acquisition method comprising:

transmitting a preamble packet comprising an impulse signal;
receiving the preamble packet and acquiring a received signal from the preamble packet using a first impulse having a first cell; and
acquiring a received signal using a second impulse having a second cell inside the first impulse having the first cell, wherein the first cell is wider than the second cell.

12. The impulse signal acquisition method of claim 11, wherein the impulse signal is one of an impulse signal having the first cell and an impulse signal having the second cell.

**13.** The impulse signal acquisition method of claim 11, wherein the preamble packet comprises a first preamble packet comprising a first impulse signal having the first cell and a second preamble packet comprising a second impulse signal having the second cell.

**14.** The impulse signal acquisition method of claim 11, wherein the received signal is compared with a threshold value, and if the received signal does not synchronize with the impulse signal, a phase of the impulse signal is shifted so as to synchronize the impulse signal with the received signal.

**15.** The impulse signal acquisition method of claim 11, wherein a pulse width of the second impulse having the second cell is 1 ns, and a pulse width of the first impulse having the first cell is 2 ns.

# FIG. 1A

# FIG. 1B

# FIG. 2A

RELATED ART METHOD

Uncertainty region: 20ns

1ns cell

Acquisition NUMBER OF TESTS: 20

PRESENT INVENTION

2ns cell

NEW UNCERTAINTY REGION: 2ns

PULSE WIDTH NARROW CELL

1ns cell

Acquisition NUMBER OF TESTS: 10

Acquisition NUMBER OF TESTS: 2

Acquisition NUMBER OF TESTS: 12

EP 1 788 717 A1

# FIG. 2B

| Preamble₁ | Preamble₂ |
|:---:|:---:|
| PULSE WIDTH WIDE CELL | PULSE WIDTH NARROW CELL |

# FIG. 2C

# FIG. 3

$T_f$

$T_{cell}$

$T_c$

$N_f$

# FIG. 4

```
          ┌──────────────┐ 410
          │ INFORMATION  │
          │ SOURCE UNIT  │
          └──────────────┘
                 │
                 ▼          412                    TX ANTENNA
          ┌──────────────┐                            ▽
          │  CONTROLLER  │          PULSE             420
          └──────────────┘          WIDTH
         │                │        CONTROL
         ▼  414           │                     416
  ┌──────────────┐        │            ┌──────────────┐
  │  SPREADING   │────────┼───────────▶│   IMPULSE    │
  │     UNIT     │                     │  GENERATOR   │
  └──────────────┘                     └──────────────┘
         │  418                        (VARIABLE WIDTH)
         ▼
  ┌──────────────┐
  │   PN CODE    │
  │  GENERATOR   │
  └──────────────┘
```

# FIG. 5

INFORMATION SOURCE UNIT — 410

CONTROLLER — 412

SPREADING UNIT — 414

PN CODE GENERATOR — 418

SWITCH — 510

PULSE GENERATOR (width 1) — 512

PULSE GENERATOR (width 2) — 514

PULSE GENERATOR (width N) — 516

TX ANTENNA — 420

EP 1 788 717 A1

# FIG. 6

RX ANTENNA

602 RECEIVED SIGNAL

604

TEMPLATE SIGNAL

608 CORRELATOR

OUTPUT Y

THRESHOLD ξ

610 COMPARATOR

y ≥ ξ

y < ξ

CELL SHIFT

612 VALIDATION UNIT

FALSE ALARM (CELL SHIFT)

606 PULSE GENERATOR (VARIABLE WIDTH)

PULSE WIDTH CONTROL

614 ACQUISITION CONTROLLER

618 PN CODE GENERATOR

616 SWITCH

INPUT DATA

EP 1 788 717 A1

# FIG. 7

# FIG. 8

ACQUISITION OF PULSE WITH WIDE CELL
(TWO TIMES NARROW CELL)

(a) Received signal

(b) Template signal

(c) Delay by $T_{cell1}$

ACQUISITION OF PULSE WITH NARROW CELL

(d) Received signal

(e) Template signal

(f) Delay by $T_{cell2}$

ACQUISITION OF PULSE SIGNAL WITH WIDE CELL

COMPLETION OF WHOLE ACQUISITION

EP 1 788 717 A1

# FIG. 9

**European Patent Office**

**EUROPEAN SEARCH REPORT**

Application Number

EP 06 12 4205

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 503 513 A (MITSUBISHI ELECTRIC INF TECH [NL]; MITSUBISHI ELECTRIC CORP [JP]) 2 February 2005 (2005-02-02) * paragraphs [0041], [0042]; figure 5 * | 1-15 | INV. H04B1/69 |
| X | US 2005/122183 A1 (LUU KY T [US] ET AL LUU KY THOAI [US] ET AL) 9 June 2005 (2005-06-09) * paragraphs [0007] - [0011]; figure 1 * | 1 | |
| A | US 2005/100079 A1 (SANADA YUKITOSHI [JP] ET AL) 12 May 2005 (2005-05-12) * figures 1,2 * | 1-15 | |
| A | EP 1 489 754 A (SAMSUNG ELECTRONICS CO LTD [KR]) 22 December 2004 (2004-12-22) * figures 4,5 * | | |

TECHNICAL FIELDS SEARCHED (IPC)

H04B
H04L

The present search report has been drawn up for all claims

| Place of search | Date of completion of the search | Examiner |
|---|---|---|
| The Hague | 12 February 2007 | AMOROTTI, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 12 4205

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2007

| Patent document cited in search report | | Publication date | Patent family member(s) | | Publication date |
|---|---|---|---|---|---|
| EP 1503513 | A | 02-02-2005 | CN | 1585287 A | 23-02-2005 |
| | | | JP | 2005051788 A | 24-02-2005 |
| | | | US | 2005031043 A1 | 10-02-2005 |
| US 2005122183 | A1 | 09-06-2005 | CA | 2489126 A1 | 08-06-2005 |
| US 2005100079 | A1 | 12-05-2005 | JP | 3847289 B2 | 22-11-2006 |
| | | | JP | 2005143012 A | 02-06-2005 |
| EP 1489754 | A | 22-12-2004 | CN | 1574655 A | 02-02-2005 |
| | | | JP | 2005012773 A | 13-01-2005 |
| | | | KR | 20040110504 A | 31-12-2004 |
| | | | US | 2004258133 A1 | 23-12-2004 |

EPO FORM P0459

For more details about this annex : see Official Journal of the European Patent Office, No. 12/82